# EUROPÄISCHE PATENTSCHRIFT

(11) **EP 0 460 382 B1**
(45) Veröffentlichungstag und Bekanntmachung des Hinweises auf die Patenterteilung: **29.11.1995**
(21) Anmeldenummer: 91105754.5
(22) Anmeldetag: 11.04.1991
(51) Int. Cl.: C09D 133/08, C09D 167/00, C09K 3/18

(54) **Beschichtung mit beschlagverhindernder Wirkung**
Coating with an anti-fogging property
Revêtement ayant une propriété anti-buée

(30) Priorität: 30.05.1990 DE 4017341
(43) Veröffentlichungstag der Anmeldung: 11.12.1991
(73) Patentinhaber: Hella KG Hueck & Co., 59552 Lippstadt (DE)
(72) Erfinder: Alers, Andreas, W-4780 Lippstadt (DE)

(56) Entgegenhaltungen:
- EP-A- 0 339 909
- FR-A- 2 253 075
- FR-A- 2 404 036

## Beschreibung

Gegenstand der Erfindung sind Lichtscheiben und lichtdurchlässige Abdeckscheiben aus anorganischem oder organischem Glas von Fahrzeugleuchten oder -scheinwerfern, beschichtet mit einem Überzugsmittel, sowie ein Verfahren zur Beschichtung der Gegenstände mit dem Überzugsmittel.

Aus der DE-A-21 59 257 ist ein Verfahren zur Erzeugung einer beschlagschützenden Oberflächenschicht aus Gegenständen aus Kunststoff, Glas oder Metall bekannt, bei dem auf der zu schützenden Oberfläche eine Schicht aus einem Celluloseester aufgebracht wird und man auf diese Schicht einen Aldehyd einwirken läßt.

Aus der DE-A-23 60 245 ist ein Verfahren zur Herstellung von beschlagfreien, durchsichtigen und gehärteten, Polyvinylalkohol und Ammoniumchlorid enthaltenden Filmen auf durchsichtigen bzw. reflektierenden Teilen bekannt, bei dem auf die Teile bei erhöhter Temperatur eine wäßrige Lösung aus Polyvinylalkohol, Dimethylolharnstoff-dimethylether und Ammoniumchlorid aufgebracht wird, danach der Film luftgetrocknet und anschließend gegebenenfalls einem Härtungsprozeß unterworfen wird.

JP-A-54-96536 beschreibt eine Pulverbeschichtung eines gesättigten Polyesterharzes mit geringen Gehalten an Polydimethylsiloxan und/oder Polymethylphenylsiloxan. Chemical Abstr. 84-61253r beschreibt die Beschichtung von Zinnblechen mit einem Gemisch eines butylierten Aminoharzes, einem Alkydharz und im einzelnen genannten Aluminiumkomplexen. US-A-4 303 456 betrifft die kontinuierliche Herstellung von laminierten elastischen Geweben mit einer guten Luft- und/oder Wasserdampfdurchlässigkeit. Ein selbstvernetzendes Copolymer wird im Zusammenhang mit einem oberflächenaktiven Schaummittel eingesetzt und in Spalte 3 ab Zeile 18 werden entsprechende Emulgatoren beschrieben, die als nichtionogene Netzmittel anzusehen sind. Diese Emulgatoren werden zur Herstellung des Polymeren benötigt. US-PS 4 156 665 beschreibt wäßrige Dispersionen von Alkyd- und/oder Aminoharze enthaltenden Glycid- und Ethylenoxidaddukten an hydrophobe Verbindungen. Hierbei handelt es sich ausweislich der Zusammenfassung und Spalte 3, Zeile 30, um reaktive Verbindungen, die für eine Vernetzung mit den Alkyd- oder Aminoharzen geeignet sind. Es wird vorgeschlagen, die Zahl der Hydroxygruppen des Moleküls möglichst hoch einzustellen, um eine Vernetzung mit dem Alkyd- oder Aminoharz herzustellen. Dementsprechend ist die oberflächenaktive Verbindung gemäß der Druckschrift (4) chemisch fest an die Bindemittelmatrix gebunden. US-A-3 935 147 ist gerichtet auf die Beschichtung von Textilien mit wäßrigen Dispersionen auf der Basis von vernetzbaren Harzen, die Fluorotenside und hochmolekulare Polysiloxanharze enthalten. US-A-3 714 100 betrifft allgemein vernetzbare Vinylacetatlatices und insbesondere die Beschichtung von ungewebten Fasern, Holzoberflächen und Textilbeschichtungen. Das Polymer wird in einer wäßrigen Emulsion unter Verwendung von anionischen oder nichtionischen oberflächenaktiven Mitteln oder Mischungen davon dispergiert. Der US-A-3 919 150 ist die Beschichtung eines Glassubstrats zu entnehmen,
dessen Beschichtung im wesentlichen aus einem hydroxyfunktionalen Acrylharz, einem wärmevernetzenden Aminoplastharz und einem ambifunktionellen epoxyreaktiven Silan besteht. Nichtionogene Netzmittel werden gemäß dieser Druckschrift nicht eingesetzt. Chemical Abstracts Vol. 109, Ref. 75368d beschreibt eine wäßrige Beschichtungsmittel-Zusammensetzung enthaltend anionische Netzmittel. Anionische Netzmittel, wie Sulfonsäuren, Schwefelsäureester, Schwefligsäureester und Phosphorsäureester, werden in geringer Konzentration Beschichtungsmaterialien beigefügt, die hydrophile Harze und Härtungsmittel enthalten. Mit den so erhaltenen Überzugsmitteln werden zinkphosphatierte Stahlbleche in wäßriger Emulsion behandelt. DE-A-35 31 031 A1 beschäftigt sich mit der Beschlagverhinderung von lichtreflektierenden oder lichtdurchlässigen Gegenständen von Fahrzeugleuchten oder -scheinwerfern. Die Autoren gehen von einem hydrophilen Polymer aus, das aufgrund der salzartigen Gruppen eine Antibeschlagwirkung entfalten soll.

Der DE-A-35 31 031 sind Überzugsmittel zum Beschichten von lichtreflektierenden oder lichtdurchlässigen Gegenständen aus anorganischem oder organischem Glas mit einer beschlagverhindernden Schicht zu entnehmen, wobei die beschlagverhindernde Schicht aus einer Lösung eines hydrophilen Kunststoffes besteht, der ein Copolymerisat aus einem Monomeren mit einer salzartigen Gruppe, insbesondere einer quartären Ammoniumgruppe, niederen Acryl- und Methacrylsäureestern, Monomeren, die zur Vernetzung befähigt sind und einem polymerisierbaren Silan, das die Haftung des hydrophilen Kunststoffs auf dem Glas verbessert, besteht.

Aus der DE-A-36 05 765 ist eine transparente Deckschicht für Sichtscheiben oder andere transparente Glas- oder Kunststoffsubstrate aus weichelastischem Polyurethan bekannt, die als Splitterschutzschicht für Substrate aus Silikatglas oder als die Kratzfestigkeit verbessernde Deckschicht für Kunststoffsubstrate dient. Um die Bildung von Feuchtigkeitsniederschlägen auf der Oberfläche der Deckschicht zu verringern bzw. zu verhindern, besteht die Polyolkomponente der Reaktionsmischung für die Herstellung der Deckschicht aus im einzelnen genannten Polyolen.

Aus der EP-A-0 269 469 sind Antibeschlagbeschichtungen auf der Basis von Polyurethanharzen bekannt, die gewisse difunktionelle sulfonierte Polyether-Polyole oder Sulfonatreste enthalten. Darüber hinaus ist die Verwendung von Polyether-Polysiloxanen in Verbindung mit den anionischen Sulfonsäureresten der Matrix bekannt.

Antibeschlagbeschichtungen wie beispielsweise gemäß der DE-A-21 59 257 oder EP-A-0 269 469 liefern durchaus mehr oder weniger brauchbare Antibeschlagwirkung. Hierunter ist zu verstehen, daß die kondensierende Feuchtigkeit zumindest für einen bestimmten Zeitraum nicht sichtbar ist.

Aus der FR-A-22 53 075 ist eine Antibeschlagbeschichtung auf der Basis eines über Methylolgruppen vernetzten Polyacrylharzes bekannt, das 10 Gew.-% eines nichtionogenen Netzmittels enthält. Das Polyarcylharz ist wasserunlöslich und das Netzmittel Fettsäure-POE-Glycolester.

In der Regel fehlt jedoch eine ausreichende Witterungsbeständigkeit oder eine ausreichende Temperaturfestigkeit. Im Handel erhältlich sind beispielsweise Acrylglas-Stegdoppelplatten, die mit einer Antibeschlagbeschichtung ausgerüstet sind.

Die Aufgabe der vorliegenden Erfindung bestand daher darin, thermisch beanspruchte Lichtscheiben und lichtdurchlässige Abdeckscheiben aus anorganischem oder organischem Glas von Fahrzeugleuchten oder -scheinwerfern dauerhaft so auszurüsten, daß es nicht zu sichtbarer Feuchtigkeitskondensation kommt, wobei diese Wirkung auch für einen langen Zeitraum, vorzugsweise die Gebrauchsdauer des Fahrzeugs, erhalten bleiben soll. Das generelle Problem ist, daß sich die bisher bekannten Beschichtungen mit ausgeprägten, zufriedenstellenden Antibeschlageigenschaften entweder nach kurzer Zeit in Wasser selbst auflösen, durch Wasser eintrüben oder aber ihre Antibeschlageigenschaft nach einer thermischen Belastung - beispielsweise durch Erwärmung im Scheinwerferbetrieb - verlieren. Dagegen haben Beschichtungen mit ausreichender Wärmebeständigkeit in der Regel ein zu geringes Antibeschlagverhalten. Die speziellen Anforderungen an eine Antibeschlagbeschichtung für Lichtscheiben und lichtdurchlässige Abdeckscheiben machen die bisher beschriebenen Lösungen der Aufgabe für die Praxis ungeeignet.

Die im Stand der Technik beschriebenen Wege zur Realisierung von Antibeschlagverhalten lassen drei unterschiedliche Wege erkennen:
1. Ein selbst wasserlösliches Polymer wird als Antibeschlagschicht aufgetragen.
   Der Vorteil dieser Beschichtung ist, daß große Wassermengen für eine kurze Zeit gebunden werden können, die Antibeschlagwirkung also sehr ausgeprägt ist.
   Der Nachteil dieser Variante besteht darin, daß derartige Polymere relativ schnell abgewaschen werden, wenn größere Mengen Kondensat anfallen. Nach einer Temperaturbelastung verlieren solche Stoffe im allgemeinen ihre Wasserlöslichkeit und damit auch ihre Antibeschlageigenschaften.
2. Ein nicht wasserlösliches Bindemittel wird durch eingebaute chemische Gruppen hydrophilisiert oder mit entsprechenden chemisch gebundenen Tensidgruppen versehen.
   Bei dieser Variante ist jedoch die Antibeschlagwirkung nur sehr schwach ausgeprägt.
3. Ein nicht wasserlösliches Polymer enthält migrationsfähige Tenside.
   Das auf einer solchen Fläche gebildete Kondensat spreitet sofort flächig und ist unsichtbar. Durch die Tensidzugabe werden die Lackeigenschaften des nicht wasserlöslichen Polymers im allgemeinen drastisch verschlechtert. Wegen der Depotwirkung des Lackbindemittels für das Tensid ist auch hier keine unbeschränkte Lebensdauer des Wirkmechanismus zu erwarten.

Voraussetzung für eine praktische Anwendung im Automobilbau ist, daß die in einem Scheinwerfer vorliegende Menge Wasserdampf nicht tropfenförmig auf den optisch wirksamen Gegenständen kondensiert, sondern flächig spreitet und praktisch unsichtbar kondensiert, wenn es aufgrund eines Temperatursturzes zu einer Feuchtekondensation kommt. Eine derartige Feuchtekondensation tritt bei handelsüblichen Scheinwerfern beispielsweise bei plötzlichem Abkühlen eines Scheinwerfers infolge eines Witterungsumschwunges auf. Hierbei kondensiert der Wasserdampf an der kältesten Stelle, das heißt im allgemeinen an der Streuscheibe und/oder an dem Reflektor.

Neben der Antibeschlagwirkung ist eine volle Naßhaftung auf den Lichtscheiben und lichtdurchlässigen Abdeckscheiben, d.h. den optisch wirksamen Bestandteilen der Fahrzeugleuchten und -scheinwerfer ebenso notwendig wie eine langandauernde Witterungsbeständigkeit.

Die vorstehend genannten Aufgaben konnten erfindungsgemäß gelöst werden durch Lichtscheiben und lichtdurchlässige Abdeckscheiben aus anorganischem oder organischem Glas von Fahrzeugleuchten oder -scheinwerfern gemäß Anspruch 1. Bevorzugte Ausführungsformen sind den Unteransprüchen zu entnehmen.

Als Bindemittelmatrix können an sich im Automobilbau bekannte Einbrennlacke auf der Basis von Acrylharzen, Alkydharzen, Polyesterharzen gegebenenfalls mit Melaminharzen sowie deren Gemische eingesetzt werden. Derartige Einbrennlacke sind in der Lackindustrie zur Herstellung von Autodecklacken bekannt und in vielfältiger Form im Handel erhältlich.

Als Acrylharze kommen vorzugsweise selbstvernetzende, wärmehärtbare Acrylharze, insbesondere epoxidharzfreie Polymere in Frage, die über Methylolgruppen aushärten. Darüber hinaus können auch fremdvernetzende, wärmereaktive Acrylharze eingesetzt werden, die Aminoharze als Komplementärharze benötigen.

Als Polyesterharze kommen vorzugsweise Kurzölalkyde, Urethanaldehyde, acrylmodifizierte Aldehyde, ölfreie Polyester und/oder silikonmodifizierte Polyester in Frage. Diese können selbstvernetzend sein oder über Aminoharze fremdvernetzend sein.

Vorzugsweise werden hitzehärtbare ölfreie Polyesterharze eingesetzt, die Isocyanat- oder Melaminharz als Komplementärharz benötigen.

Als Aminoharze kommen im Bereich des Automobilbaus bekannte Komponenten von Einbrennlacken vorteilhafterweise zum Einsatz. Insbesondere seien hier stellvertretend Melaminharze genannt, die als Kondensationsprodukt aus Melamin und Formaldehyd mit einem Kondensationsgrad zwischen 1 und 5 bekannt sind.

Gegebenenfalls können in den erfindungsgemäßen Beschichtungen weitere Harze, insbesondere Epoxidharze, in einer Menge von bis zu 10 Gew.-%, bezogen auf die Bindemittelmatrix, enthalten sein.

Obligatorisch für die erfindungsgemäßen Lichtscheiben und lichtdurchlässige Abdeckscheiben ist die Anwesenheit wenigstens eines nichtionogenen Netzmittels im Überzugsmittel, die prinzipiell aus Ullmanns Encyklopädie der technischen Chemie, 4. Auflage, Band 22, Seite 488 ff, bekannt sind. Diese sind gemäß der vorliegenden Erfindung ausgewählt aus wenigstens einem oder Gemischen von
(a) Fettalkoholen und/oder Fettaminen mit 8 bis 18 C-Atomen, Oxoalkoholen mit 9 bis 15 C-Atomen und Nonylphenol, jeweils mit 1 bis 14 Mol Ethylenoxid oder Propylenoxid pro Mol,
(b) Alkylmonoglucosiden und/oder Alkylpolyglucosiden mit 2 bis 6 Glucoseeinheiten, jeweils mit acetalischer Bindung des geradkettigen und gesättigten, 8 bis 18 C-Atome aufweisenden Alkylrestes an Glucose mit bis zu 14 Ethylenoxidgruppen pro Mol sowie die entsprechenden Mono-, Di- und Triglyceride,
(c) endständig blockierten Oxethylaten der allgemeinen Formel I

   R-O[CH₂-CH₂O]ₙ-H (I)

   wobei
   - R: für einen Alkyl-, Aryl- oder einen Alkylarylrest mit 1 bis 10 C-Atomen und
   - n: für eine ganze Zahl im Bereich von 4 bis 10 steht,
   die gegebenenfalls an höhere Alkoxide addiert werden und
(d) Polyether-Polysiloxanen.

Die Aufgabe des nichtionogenen Netzmittels besteht insbesondere in der Spreitung des auf der Oberfläche gebildeten Wasserfilms bei der Feuchtkondensation. Bestimmte Kombinationen nichtionogener Netzmittel, die beispielsweise Nonylphenol-Ethoxylate enthalten, vermögen darüber hinaus wasserunlösliche, nichtionogene Netzmittel an die Oberfläche zu transportieren und die Verträglichkeit zwischen der Bindemittelmatrix und gegebenenfalls weiteren nichtionogenen Netzmitteln zu erhöhen.

Prinzipiell sind zwar gegen die Feuchtkondensation alle bekannten nichtionischen Netzmittel einsetzbar. Um jedoch für die Anwendungen der Automobilindustrie einen praktisch nicht sichtbaren, transparenten Film auf Lichtscheiben und lichtdurchlässigen Abdeckscheiben aus anorganischem oder organischem Glas zur Verfügung zu stellen, ist eine Abstimmung der Komponenten (Bindemittelmatrix und nichtionogenes Netzmittel sowie gegebenenfalls weitere Bestandteile) untereinander erforderlich, die jedoch ohne weiteres mit Hilfe von Routine-Versuchen durchgeführt werden kann. In diesen Versuchen kann ohne weiteres festgestellt weren, welche Kombination von Bestandteilen klare, ganzflächig durchsichtige und glatte Oberflächen liefert, die darüber hinaus frei von sichtbaren Einschlüssen sind.

Besonders bevorzugt im Sinne der vorliegenden Erfindung ist das nichtionogene Netzmittel des Überzugsmittels ausgewählt aus Nonylphenol mit 6 bis 10 Ethylenoxidgruppen, insbesondere 8 Ethylenoxidgruppen und/oder Sorbitanmonostearat-Oleat oder -Laurat mit bis zu 14 Ethylenoxidgruppen und/oder Polyether-Polymethyl-Siloxan-Copolymeren der allgemeinen Formel II 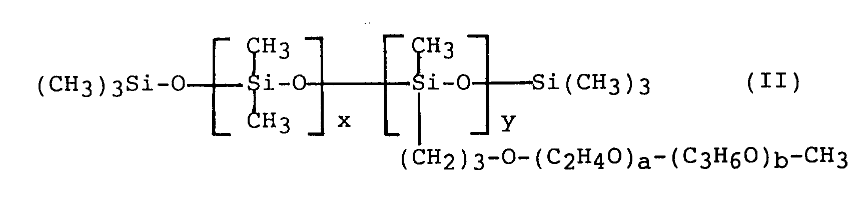
wobei
das Verhältnis von x zu y im Bereich von 5 zu 1 bis 1 zu 1 besteht,
- a: 80 bis 100 Gew.-% und
- b: 20 bis 0 Gew.-% entspricht,
sowie deren Gemische.

Zufriedenstellende Lichtscheiben und lichtdurchlässige Abdeckscheiben aus anorganischem oder organischem Glas können erhalten werden, wenn die Konzentration des nichtionogenen Netzmittels im Bereich von 5 bis 60 Gew.-%, bezogen auf die Bindemittelmatrix, eingestellt wird. Bevorzugt in diesem Sinne wird eine Konzentration von 10 bis 30 Gew.-% nichtionogenem Netzmittel, bezogen auf die Bindemittelmatrix, da bei geringen Netzmittelkonzentrationen die Haftung auf der Substratfläche im allgemeinen verbessert ist. Bei hohen Anteilen des Netzmittels ist jedoch die Antibeschlagwirkung stärker ausgeprägt.

Obwohl erfindungsgemäße Beschichtungen auf der Basis der genannten, nicht wasserlöslichen Bindemittelmatrix und eines nichtionogenen Netzmittels in der Regel schon ausreichend gute Antibeschlageigenschaften entwickeln, kann jedoch in manchen Fällen die Haftfestigkeit des Filmes insbesondere auf Lichtscheiben und lichtdurchlässigen Abdeckscheiben aus anorganischem oder organischem Glas, vor allem Streuscheibengläser, unbefriedigend sein. In diesem Falle können jedoch in einer weiteren Ausführungsform der vorliegenden Erfindung beispielsweise organofunktionelle Silane als Haftvermittler eingesetzt werden. Derartige organofunktionelle Silane sind aus Ullmanns Encyklopädie der technischen Chemie, 4. Auflage, Band 21, Seiten 498 und 499, bekannt. Darüber hinaus enthalten auch die in der DE-A-35 31 031 beschriebenen Überzugsmittel derartige Silane zur Verbesserung der Haftung des hydrophilen Kunststoffes auf dem Glas.

In einer bevorzugten Ausführungsform der vorliegenden Erfindung enthalten die erfindungsgemäßen Beschichtungen und die Überzugsmittel daher funktionelle Trialkoxysilane der allgemeinen Formel III

Y-(CH₂)ₙ-Si-(OR)₃ (III),

wobei
- Y: für Amino-, Carboxy-, Cyano-, Methacryloxy-, Epoxy-, Mercapto- oder Vinylgruppen,
- n: für eine ganze Zahl im Bereich von 1 bis 3 oder 0 und
- R: für einen Alkylrest mit 1 bis 3 C-Atomen, insbesondere CH₃,
steht.

In einer weiteren bevorzugten Ausführungsform der vorliegenden Erfindung ist das Trialkoxysilan ausgewählt aus 3-(2,3-Epoxypropyloxy)propyl(trimethoxy)silan oder N-β-(Aminoethyl)aminopropyl(trimethoxy)silan.

Derartige Haftvermittler können, bezogen auf die Bindemittelmatrix, in einer Menge von 1 bis 10 Gew.-%, insbesondere 1 bis 5 Gew.-%, eingesetzt werden.

Darüber hinaus betrifft die Erfindung ein Verfahren zum Beschichten von Lichtscheiben und lichtdurchlässigen Abdeckscheiben aus anorganischem oder organischem Glas mit einem Überzugsmittel wie oben definiert, wobei man die Mischung der Bestandteile des Überzugsmittels, gegebenenfalls in einem inerten Lösungsmittel, mit gewünschten Teilen der Oberfläche der Gegenstände unter Bildung eines gleichmäßigen Filmes in Kontakt bringt, gegebenenfalls an der Luft trocknet und anschließend im Verlauf von 1 min bis 1 h bei einer Temperatur im Bereich von 80 bis 400 °C einbrennt.

Als im Stand der Technik bekannte, für derartige Einbrennlacke einsetzbare Lösungsmittel kommen beispielsweise Xylol, Butanol, Propylenglykol-Monoalkylether, insbesondere -Butylether, in Frage. Diese Lösungsmittel dienen insbesondere als Verlaufmittel zur Bildung eines möglichst gleichmäßigen Films. Darüber hinaus sind jedoch auch die in jüngester Zeit entwickelten Pulverlacke einsetzbar, die vollkommen lösemittelfrei sind. Bevorzugt werden jedoch aufgrund der besseren Handhabbarkeit derzeit lösemittelhaltige, insbesondere lösemittelarme Lacke eingesetzt. Die mögliche Vortrocknung bei Raumtemperatur an der Luft bewirkt durch Ablüften ein Verdunsten des Lösungsmittels im sogenannten "Flash-Off-Verfahren". Die Trocknungszeit ist insofern nicht kritisch, sondern hängt von den Belüftungsbedingungen ab.

Während im allgemeinen ein Temperaturbereich zur Erwärmung der Überzugsmittel im Bereich von 80 bis 400 °C eingehalten werden sollte, besteht eine bevorzugte Ausführungsform der vorliegenden Erfindung darin, Gegenstände aus anorganischem Glas im Temperaturbereich von 150 bis 200 °C einzubrennen. Gegenstände aus organischem Glas werden vorzugsweise bei 80 bis 150 °C eingebrannt. Bei diesen Temperaturen finden die Kondensationsreaktionen statt, die für eine ausreichende Härte der Schicht erforderlich sind.

Die genannten Temperaturen können aber auch drastisch überschritten werden, wenn die Einwirkungszeit entsprechend kurz gehalten wird. Bei der Verwendung von bekannten Katalysatoren lassen sich jedoch die Einbrenntemperaturen auch unterhalb der genannten Bereiche erniedrigen. Diese Temperaturbereiche sind insbesondere bei Gegenständen aus organischem Glas erforderlich, die im Gegensatz zu Gegenstanden aus anorganischem Glas eine deutlich verminderte Wärmebeständigkeit aufweisen.

Die Überzugsfilme werden vorzugsweise durch Gießen, Rollen, Streichen, Spritzen und/oder Tauchen aufgebracht.

Eine weitere Ausführungsform der Erfindung besteht in der Verwendung von Fettsäuren mit 8 bis 18 C-Atomen, enthaltend 1 bis 14 Mol Ethylenoxid oder Propylenoxid zur Herstellung beschlagverhindernder Beschichtungen von thermisch beanspruchten Lichtscheiben und lichtdurchlässigen Abdeckscheiben von Fahrzeugleuchten und -scheinwerfern in einem Überzugsmittel auf der Basis einer nicht wasserlöslichen Bindemittelmatrix eines über Methylolgruppen selbst- oder über Aminoharze fremdvernetzten Polyacryl- und/oder Polyesterharzes, das wenigstens ein nichtionogenes Netzmittel einschließlich der alkoxilierten Fettsäuren in einer Menge von 5 bis 60 Gew.-%, bezogen auf die Bindemittelmatrix enthält.

### Beispiele

### Beispiel 1

Ein Gemisch, bestehend aus
einem Lackharz aus:
47,5 Gew.-Teilen Acrylharz (epoxidharzfreies, selbstvernetzendes, wärmehärtendes, über Methylolgruppen härtendes Harz, Larodur^{R} 152)
13 Gew.-Teile Melaminharz (nichtplastifiziertes, verethertes Melamin-Formaldehydarz, Maprenal^{R} MF 650)
5 Gew.-Teile Epoxidharz (festes Standard-Epoxidharz auf Bisphenol-A-Basis, Rütapox 0191)
34 Gew.-Teile Lösungsmittel (Xylol),
20 Gew.-Teile eines nichtionischen Netzmittels (Polyether-Polymethyl-Siloxan-Copolymer, Tegopren 5878) und
1 Gew.-Teil eines Haftvermittlers (3-(2,3-Epoxypropyloxy)propyl(trimethoxy)silan (Silan A-187))
wurde durch Spritzlackieren auf der Innenseite einer handelsüblichen Streuscheibe aus anorganischem Glas eines Personenkraftwagens aufgebracht.

Im Verlauf von 10 min ließ man die Hauptmenge des Lösungsmittels verdunsten.

Anschließend wurde 20 min bei 180 °C eingebrannt und die Antibeschlagwirkung nach Lagerung im Klima nach DIN 50017 visuell geprüft.

Die Antibeschlagwirkung war gut. Auch nach einer Dauerwärmebelastung der Streuscheibe bei 120 °C im Verlauf von 144 h wurde keine sichtbare Betauung festgestellt.

Die Haftung des Überzugsmittels auf der Glasoberfläche wurde nach DIN 53151 (Gitterschnitt-Test) bestimmt. Hierbei wird durch Aufbringen und Abziehen eines Klebefilms die Lackablösung vermessen.

Die Kennziffer 0 entspricht einer unveränderten Lackhaftung, die Kennziffer 1 steht für sehr kleine Lackablösungen, während die Kennziffer 5 für eine großflächige Lackablösung steht.

Es wurde eine Kennziffer von 0 festgestellt.

In einer Klimakammer bei einer Tempertur von 40 °C und einer Luftfeuchtigkeit von 100 % wurde auch nach mehr als 96 h keine Lackablösung (Kennziffer 0) und eine gute Antibeschlagwirkung festgestellt.

### Beispiel 2

Ein Gemisch aus einem Lackharz der in Beispiel 1 beschriebenen Zusammensetzung, jedoch unter Verwendung von 17 Gew.-Teilen des nichtionischen Netzmittels, wurde unter identischen Bedingungen auf die Innenseite einer handelsüblichen Streuscheibe aus anorganischem Glas aufgebracht und eingebrannt. Die Antibeschlagwirkung war gut. Es wurde ein Haftungswert von 0 sowohl nach der Wärmebelastung bei 120 °C als auch nach dem Test in der Klimakammer erhalten. Die Antibeschlagwirkung war gut.

### Beispiel 3

Ein Gemisch, bestehend aus einem Lackharz aus:
28 Gew.-Teilen siliconmodifiziertem Polyesterharz (Duroftal^{R} VTS 1202),
26 Gew.-Teilen ölfreiem Polyesterharz (Alftalat^{R} AN 950),
7 Gew.-Teilen Melaminharz (Maprenal^{R} MF 590),
39 Gew.-Teilen Propylenglykolmethylether (Dowanol^{R} PM) und
10 Gew.-Teilen des nichtionischen Netzmittels gemäß Beispiel 1 ohne Anwendung eines Haftvermittlers
wurde analog Beispiel 1 auf der Innenseite einer Streuscheibe aus anorganischem Glas aufgebracht und eingebrannt.

Die Antibeschlagwirkung war gut. Nach einer Dauerwärmebelastung von 120 °C wurde jedoch nach 24 h eine geringe Betauung festgestellt.

In der Klimakammer wurde nach 240 h eine unverändert gute Lackhaftung festgestellt. Die Antibeschlagwirkung war gut.

### Beispiel 4

Ein Gemisch aus einem Lackharz mit den Bestandteilen des Beispiels 3, jedoch unter Verwendung einer Netzmittelkombination aus 9 Gew.-Teilen Nonylphenolpolyglykolether mit 8 Ethylenoxidgruppen pro Mol Nonylphenol und 1 Gew.-Teil des nichtionogenen Netzmittels gemäß Beispiel 1 sowie 1 Gew.-Teil des Haftvermittlers gemäß Beispiel 1 wurde entsprechend Beispiel 1 auf der Innenseite einer handelsüblichen Streuscheibe aus anorganischem Glas aufgebracht und eingebrannt.

Die Antibeschlagwirkung war gut. Erst nach einer Dauerwärmebehandlung von 120 °C von 48 h konnte eine leichte Betauung festgestellt werden.

In der Klimakammer wurde auch nach 240 h eine unverändert gute Lackhaftung festgestellt. Die Antibeschlagwirkung war gut.

### Beispiel 5

Ein Gemisch, bestehend aus einem Lackharz aus:
46 Gew.-Teilen des ölfreien Polyesterharzes gemäß Beispiel 3,
12 Gew.-Teilen Melaminharz (Maprenal^{R} MF 927),
42 Gew.-Teilen Lösungsmittel (Xylol) und
10 Gew.-Teilen der Netzmittelkombination gemäß Beispiel 4 und
1 Gew.-Teil Haftvermittler (N-β-Aminoethylaminopropyltrimethoxysilan (GF-91))
wurde analog Beispiel 1 auf der Innenseite einer Streuscheibe aus anorganischem Glas aufgebracht und eingebrannt.

Die Antibeschlagwirkung war gut. Nach einer Dauerwärmebelastung von 120 °C im Verlauf von 48 h konnte eine leichte Betauung festgestellt werden.

Im Gitterschnitt-Test wurde eine Kennziffer von 0, d.h. keine Lackablösung, festgestellt.

Auch nach einer 240-stündigen Behandlung der Oberfläche in der Klimakammer konnte eine unverändert gute Lackhaftung festgestellt werden. Die Antibeschlagwirkung war gut.

### Beispiel 6

Ein Gemisch aus einem Lackharz mit den Bestandteilen des Beispiels 5, jedoch unter Verwendung von 5 Gew.-Teilen Polyoxyethylensorbitanmonostearat (Disponil^{R} SMS 120 F1) anstelle der Netzmittelkombination wurde auf der Innenseite einer Streuscheibe aus anorganischem Glas analog Beispiel 1 aufgebracht und eingebrannt.

Die Antibeschlagwirkung war gut. Auch nach einer Dauerwärmebelastung von 120 °C im Verlauf von 168 h konnte kein Nachlassen der Antibeschlagwirkung festgestellt werden.

Der Gitterschnitt-Test ergab eine Kennziffer von 0, d.h. keine Lackablösung.

Auch nach einer 240-stündigen Behandlung der Oberfläche in der Klimakammer konnte eine unveränderte Lackhaftung festgestellt werden. Die Antibeschlagwirkung war gut.

### Beispiel 7

Ein Gemisch aus einem Lackharz mit den Bestandteilen des Beispiels 5, jedoch unter Verwendung von 5 Gew.-Teilen eines Polyoxyethylensorbitanmonolaureats (Disponil^{R} SML 120) anstelle der Netzmittelkombination wurde auf der Innenseite einer Streuscheibe aus anorganischem Glas analog Beispiel 1 aufgebracht und eingebrannt.

Die Antibeschlagwirkung war gut. Auch nach einer 169-stündigen Dauerwärmebelastung von 120 °C wurde eine gute Antibeschlagwirkung festgestellt.

Der Gitterschnitt-Test ergab die Kennziffer 0. Auch nach einer 240-stündigen Behandlung in der Klimakammer wurde keine Änderung der Lackhaftung festgestellt. Die Antibeschlagwirkung war gut.

## Patentansprüche

1. Lichtscheiben und lichtdurchlässige Abdeckscheiben aus anorganischem oder organischem Glas von Fahrzeugleuchten oder -scheinwerfern, beschichtet mit einem Überzugsmittel auf der Basis einer nicht wasserlöslichen Bindemittelmatrix eines über Methylolgruppen selbst- oder über Aminoharze fremdvernetzten Polyacryl- und/oder Polyesterharzes, das wenigstens ein nichtionogenes Netzmittel in einer Menge von 5 bis 60 Gew.-%, bezogen auf die Bindemittelmatrix, enthält, ausgewählt aus wenigstens einem oder Gemischen von
(a) Fettalkoholen und/oder Fettaminen mit 8 bis 18 C-Atomen, Oxoalkoholen mit 9 bis 15 C-Atomen und Nonylphenol, jeweils mit 1 bis 14 Mol Ethylenoxid oder Propylenoxid pro Mol,
(b) Alkylmonoglucosiden und/oder Alkylpolyglucosiden mit 2 bis 6 Glucoseeinheiten, jeweils mit acetalischer Bindung des geradkettigen und gesättigten, 8 bis 18 C-Atome aufweisenden Alkylrestes an Glucose mit bis zu 14 Ethylenoxidgruppen pro Mol sowie die entsprechenden Mono-, Di- und Triglyceride,
(c) endständig blockierten Oxethylaten der allgemeinen Formel I
R-O[CH₂-CH₂O]ₙ-H (I)
wobei
R für einen Alkyl-, Aryl- oder einen Alkylarylrest mit 1 bis 10 C-Atomen und.
n für eine ganze Zahl im Bereich von 4 bis 10 steht,
die gegebenenfalls an höhere Alkoxide addiert werden und
(d) Polyether-Polysiloxanen.

2. Ausführungsform nach Anspruch 1, dadurch gekennzeichnet, daß die Bindemittelmatrix weitere Harze, insbesondere Epoxidharze, in einer Menge von bis zu 10 Gew.-% enthält.

3. Gegenstände nach Anspruch 1, dadurch gekennzeichnet, daß das nichtionogene Netzmittel des Überzugsmittels ausgewählt ist aus Nonylphenol mit 6 bis 10 Ethylenoxidgruppen, insbesondere 8 Ethylenoxidgruppen pro Mol und/oder Sorbitanmonostearat-Oleat oder -Laurat mit bis zu 14 Ethylenoxidgruppen pro Mol und/oder Polyether-Polymethyl-Siloxancopolymeren der allgemeinen Formel II 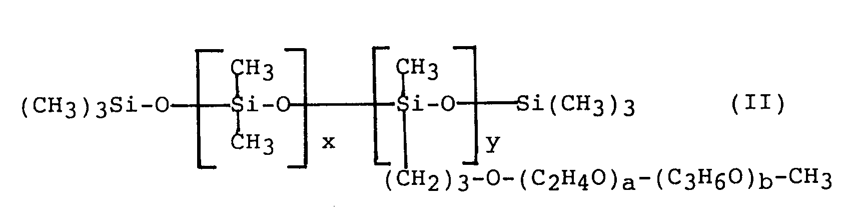 wobei
das Verhältnis von x zu y im Bereich von 5 zu 1 bis 1 zu 1 besteht,
a 80 bis 100 Gew.-% und
b 20 bis 0 Gew.-% entspricht.

4. Ausführungsform nach Ansprüchen 1, gekennzeichnet durch die Konzentration des nichtionogenen Netzmittels des Überzugsmittels, bezogen auf die Bindemittelmatrix im Bereich von 10 bis 30 Gew.-%.

5. Ausführungsform nach Ansprüchen 1 bis 4, dadurch gekennzeichnet, daß das Überzugsmittel wenigstens einen Haftvermittler enthält.

6. Ausführungsform nach Anspruch 5, dadurch gekennzeichnet, daß das Überzugsmittel als Haftvermittler funktionelle Trialkoxysllane der allgemeinen Formel III
Y-(CH₂)ₙSi-(OR)₃ (III)
enthält,
Y für Amino-, Carboxy-, Cyano-, Methacryloxy-, Epoxy-, Mercapto- oder Vinylgruppen,
n für eine ganze Zahl im Bereich von 1 bis 3 oder 0 und
R für einen Alkylrest mit 1 bis 3 C-Atomen, insbesondere CH₃
steht.

7. Ausführungsform nach Anspruch 6, dadurch gekennzeichnet, daß das Trialkoxysilan des Überzugsmittels ausgewählt ist aus 3-(2,3-Epoxypropyloxy)propyl(trimethoxy)silan oder N-β-(Aminoethyl)aminopropyl(trimethoxy)silan.

8. Ausführungsform nach Ansprüchen 5 bis 7, dadurch gekennzeichnet, daß das Überzugsmittel einen Haftvermittler in einer Menge von 1 bis 10 Gew.-%, insbesondere 1 bis 5 Gew.-%, bezogen auf die Bindemittelmatrix, enthält.

9. Verfahren zum Beschichten von Lichtscheiben und lichtdurchlässigen Abdeckscheiben aus anorganischem oder organischem Glas von Fahrzeugleuchten oder -scheinwerfern mit einem Überzugsmittel auf der Basis einer nicht wasserlöslichen Bindemittelmatrix eines über Methylolgruppen selbst- oder über Aminoharze fremdvernetzten Polyacryl- und/oder Polyesterharzes, das wenigstens ein nichtionogenes Netzmittel in einer Menge von 5 bis 60 Gew.-%, bezogen auf die Bindemittelmatrix, enthält, ausgewählt aus wenigstens einem oder Gemischen von
(a) Fettalkoholen und/oder Fettaminen mit 8 bis 18 C-Atomen, Oxoalkoholen mit 9 bis 15 C-Atomen und Nonylphenol, jeweils mit 1 bis 14 Mol Ethylenoxid oder Propylenoxid pro Mol,
(b) Alkylmonoglucosiden und/oder Alkylpolyglucosiden mit 2 bis 6 Glucoseeinheiten, jeweils mit acetalischer Bindung des geradkettigen und gesättigten, 8 bis 18 C-Atome aufweisenden Alkylrestes an Glucose mit bis zu 14 Ethylenoxidgruppen pro Mol sowie die entsprechenden Mono-, Di- und Triglyceride,
(c) endständig blockierten Oxethylaten der allgemeinen Formel I
R-O[CH₂-CH₂O]ₙ-H (I)
wobei
R für einen Alkyl-, Aryl- oder einen Alkylarylrest mit 1 bis 10 C-Atomen und
n für eine ganze Zahl im Bereich von 4 bis 10 steht,
die gegebenenfalls an höhere Alkoxide addiert werden und
(d) Polyether-Polysiloxanen,
wobei man die Mischung der Bestandteile des Überzugsmittels, gegebenenfalls in einem inerten Lösungsmittel, mit gewünschten Teilen der Oberfläche der Lichtscheiben und lichtdurchlässigen Abdeckscheiben unter Bildung eines gleichmäßigen Filmes in Kontakt bringt, gegebenenfalls an der Luft trocknet und anschließend im Verlauf von 1 min bis 1 h bei einer Temperatur im Bereich von 80 bis 400 °C einbrennt.

10. Verfahren nach Anspruch 9, dadurch gekennzeichnet, daß die Bindemittelmatrix weitere Harze, insbesondere Epoxidharze, in einer Menge von bis zu 10 Gew.-% enthält.

11. Verfahren nach Ansprüchen 9 oder 10, dadurch gekennzeichnet, daß das nichtionogene Netzmittel des Überzugsmittels ausgewählt ist aus Nonylphenol mit 6 bis 10 Ethylenoxidgruppen, insbesondere 8 Ethylenoxidgruppen pro Mol und/oder Sorbitanmonostearat-Oleat oder -Laurat mit bis zu 14 Ethylenoxidgruppen pro Mol und/oder Polyether-Polymethyl-Siloxancopolymeren der allgemeinen Formel II 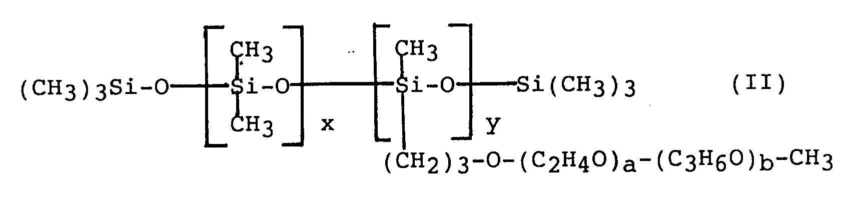 wobei
das Verhältnis von x zu y im Bereich von 5 zu 1 bis 1 zu 1 besteht,
a 80 bis 100 Gew.-% und
b 20 bis 0 Gew.-% entspricht.

12. Verfahren nach Ansprüchen 9 bis 11, dadurch gekennzeichnet, daß die Konzentration des nichtionogenen Netzmittels des Überzugsmittels, bezogen auf die Bindemittelmatrix, 10 bis 30 Gew.-% beträgt.

13. Verfahren nach Ansprüche 9 bis 12, dadurch gekennzeichnet, daß man ein Überzugsmittel einsetzt, das wenigstens einen Haftvermittler enthält.

14. Verfahren nach Anspruch 13, dadurch gekennzeichnet, daß das Überzugsmittel als Haftvermittler funktionelle Trialkoxysilane der allgemeinen Formel III
Y-(CH₂)ₙSi-(OR)₃ (III)
enthält,
Y für Amino-, Carboxy-, Cyano-, Methacryloxy-, Epoxy-, Mercapto- oder Vinylgruppen,
n für eine ganze Zahl im Bereich von 1 bis 3 oder 0 und
R für einen Alkylrest mit 1 bis 3 C-Atomen, insbesondere CH₃
steht.

15. Verfahren nach Anspruch 14, dadurch gekennzeichnet, daß das Trialkoxysilan des Überzugsmittels ausgewählt ist aus 3-(2,3-Epoxypropyloxy)propyl(trimethoxy)silan oder N-β-(Aminoethyl)aminopropyl(trimethoxy)silan.

16. Verfahren nach Ansprüchen 13 bis 15, dadurch gekennzeichnet, daß das Überzugsmittel einen Haftvermittler in einer Menge von 1 bis 10 Gew.-%, insbesondere 1 bis 5 Gew.-%, bezogen auf die Bindemittelmatrix, enthält.

17. Verfahren nach Ansprüchen 9 bis 16, dadurch gekennzeichnet, daß als Lösungsmittel Xylol, Butanol, Propylenglykol-Monoalkylether, insbesondere -Butylether, eingesetzt wird.

18. Verfahren nach Ansprüchen 9 bis 17, dadurch gekennzeichnet, daß die Lichtscheiben und lichtdurchlässigen Abdeckscheiben aus anorganischem Glas bei einer Temperatur im Bereich von 150 bis 200 °C eingebrannt werden.

19. Verfahren nach Ansprüchen 9 bis 17, dadurch gekennzeichnet, daß die Lichtscheiben und lichtdurchlässigen Abdeckscheiben aus organischem Glas bei einer Temperatur im Bereich von 80 bis 150 °C eingebrannt werden.

20. Verfahren nach Ansprüchen 9 bis 19, dadurch gekennzeichnet, daß der Überzugsfilm durch Gießen, Rollen, Streichen, Spritzen und/oder Tauchen aufgebracht wird.

21. Verwendung von Fettsäuren mit 8 bis 18 C-Atomen, enthaltend 1 bis 14 Mol Ethylenoxid oder Propylenoxid zur Herstellung beschlagverhindernder Beschichtungen von thermisch beanspruchten Lichtscheiben und lichtdurchlässigen Abdeckscheiben von Fahrzeugleuchten und -scheinwerfern in einem Überzugsmittel auf der Basis einer nicht wasserlöslichen Bindemittelmatrix eines über Methylolgruppen selbst- oder über Aminoharze fremdvernetzten Polyacryl- und/oder Polyesterharzes, das wenigstens, ein nichtionogenes Netzmittel einschließlich der alkoxilierten Fettsäuren in einer Menge von 5 bis 60 Gew.-%, bezogen auf die Bindemittelmatrix enthält.

22. Verwendung von alkoxilierten Fettsäuren nach Anspruch 21 in einem Verfahren gemäß den Ansprüchen 9 bis 20.

## Claims

1. Lens covers and transparent cover plates made of inorganic or organic glass, of vehicle lights or headlamps, coated with a coating medium based on a water-insoluble binder vehicle matrix of a polyacrylic and/or polyester resin, which is self-crosslinked via methylol groups or which is externally crosslinked via amino resins, which contains at least one nonionic surface-active agent in an amount of 5 to 60 % by weight, with respect to the binder vehicle matrix, selected from at least one of or mixtures of
(a) fatty alcohols and/or fatty amines containing 1 to 18 C atoms, oxo alcohols containing 9 to 15 C atoms, and nonylphenol, each containing 1 to 14 moles of ethylene oxide or propylene oxide per mole,
(b) alkyl monoglucosides and/or alkyl polyglucosides containing 2 to 6 glucose units, each with an acetal bond of the straight chain, saturated alkyl radical containing 8 to 18 C atoms to glucose containing up to 14 ethylene oxide groups per mole, as well as the corresponding mono-, di- and triglycerides,
(c) terminally blocked oxyethylates of general formula I
R-O[CH₂-CH₂O]ₙ-H (I),
where
R represents an alkyl, an aryl or an alkylaryl radical containing 1 to 10 C atoms, and
n represents an integer in the range from 4 to 10,
which are optionally added to higher alkoxides, and
(d) polyether-polysiloxanes.

2. An embodiment according to claim 1, characterised in that the binder vehicle matrix contains further resins, particularly epoxy resins, in an amount up to 10 % by weight.

3. Articles according to claim 1, characterised in that the nonionic surface-active agent of the coating medium is selected from nonylphenol containing 6 to 10 ethylene oxide groups, particularly 8 ethylene oxide groups, per mole, and/or sorbityl monostearate, oleate or laurate containing up to 14 ethylene oxide groups per mole, and/or polyether-polymethylsiloxane copolymers of general formula II 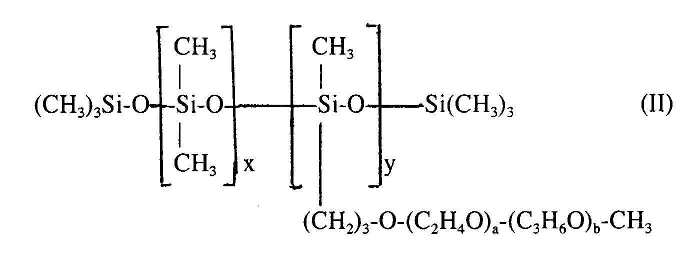 where
the ratio of x to y is in the range from 5 to 1 to 1 to 1,
a corresponds to 80 to 100 % by weight, and
b corresponds to 20 to 0 % by weight.

4. An embodiment according to claim 1, characterised by the concentration of the nonionic surface-active agent of the coating medium being within the range of 10 to 30 % by weight with respect to the binder vehicle matrix.

5. An embodiment according to claims 1 to 4, characterised in that the coating medium contains at least one bonding agent.

6. An embodiment according to claim 5, characterised in that the coating medium contains functional trialkoxysilanes of general formula III
Y-(CH₂)ₙSi-(OR)₃ (III),
as a bonding agent,
where
Y represents amino, carboxy, cyano, methacryloxy, epoxy, mercapto or vinyl groups,
n represents an integer in the range from 1 to 3, or 0, and
R represents an alkyl radical containing 1 to 3 C atoms, particularly CH₃.

7. An embodiment according to claim 6, characterised in that the trialkoxysilane of the coating medium is selected from 3-(2,3-epoxypropyloxy)propyl(trimethoxy)silane or N-β-(aminoethyl)aminopropyl(trimethoxy)silane.

8. An embodiment according to claims 5 to 7, characterised in that the coating medium contains a bonding agent in an amount of 1 to 10 % by weight, particularly 1 to 5 % by weight, with respect to the binder vehicle matrix.

9. A process for coating lens covers and transparent cover plates made of inorganic or organic glass, of vehicle lights or headlamps, with a coating medium based on a water-insoluble binder vehicle matrix of a polyacrylic and/or polyester resin, which is self-crosslinked via methylol groups or which is externally crosslinked via amino resins, which contains at least one nonionic surface-active agent in an amount of 5 to 60 % by weight, with respect to the binder vehicle matrix, selected from at least one of or mixtures of
(a) fatty alcohols and/or fatty amines containing 1 to 18 C atoms, oxo alcohols containing 9 to 15 C atoms, and nonylphenol, each containing 1 to 14 moles of ethylene oxide or propylene oxide per mole,
(b) alkyl monoglucosides and/or alkyl polyglucosides containing 2 to 6 glucose units, each with an acetal bond of the straight chain, saturated alkyl radical containing 8 to 18 C atoms to glucose containing up to 14 ethylene oxide groups per mole, as well as the corresponding mono-, di- and triglycerides,
(c) terminally blocked oxyethylates of general formula I
R-O[CH₂-CH₂O]ₙ-H (I),
where
R represents an alkyl, an aryl or an alkylaryl radical containing 1 to 10 C atoms, and
n represents an integer in the range from 4 to 10,
which are optionally added to higher alkoxides, and
(d) polyether-polysiloxanes,
wherein the mixture of the coating constituents, optionally in an inert solvent, is brought into contact with the desired parts of the surface of the lens covers and transparent cover plates with the formation of a uniform film, is optionally dried in air, and is subsequently stoved over 1 minute to 1 hour at a temperature in the range from 80 to 400°C.

10. A process according to claim 9, characterised in that the binder vehicle matrix contains further resins, particularly epoxy resins, in an amount up to 10 % by weight.

11. A process according to claims 9 or 10, characterised in that the nonionic surface-active agent of the coating medium is selected from nonylphenol containing 6 to 10 ethylene oxide groups, particularly 8 ethylene oxide groups, per mole, and/or sorbityl monostearate, oleate or laurate containing up to 14 ethylene oxide groups per mole, and/or polyetherpolymethyl-siloxane copolymers of general formula II 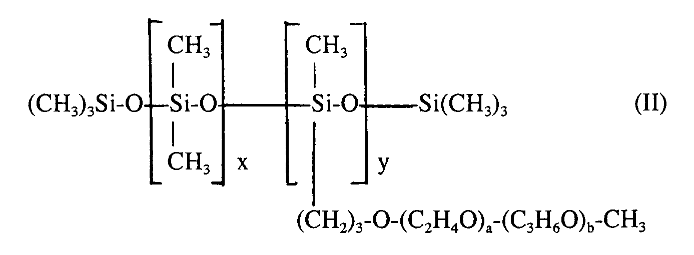 where
the ratio of x to y is in the range from 5 to 1 to 1 to 1,
a corresponds to 80 to 100 % by weight, and
b corresponds to 20 to 0 % by weight.

12. A process according to claims 9 to 11, characterised in that the concentration of the nonionic surface-active agent of the coating medium is within the range of 10 to 30 % by weight with respect to the binder vehicle matrix.

13. A process according to claims 9 to 12, characterised in that a coating medium is used which contains at least one bonding agent.

14. A process according to claim 13, characterised in that the coating medium contains functional trialkoxysilanes of general formula III
Y-(CH₂)ₙSi-(OR)₃ (III),
as a bonding agent,
where
Y represents amino, carboxy, cyano, methacryloxy, epoxy, mercapto or vinyl groups,
n represents an integer in the range from 1 to 3, or 0, and
R represents an alkyl radical containing 1 to 3 C atoms, particularly CH₃.

15. A process according to claim 14, characterised in that the trialkoxysilane of the coating medium is selected from 3-(2,3-epoxypropyloxy)propyl(trimethoxy)silane or N-β-(aminoethyl)aminopropyl(trimethoxy)silane.

16. A process according to claims 13 to 15, characterised in that the coating medium contains a bonding agent in an amount of 1 to 10 % by weight, particularly 1 to 5 % by weight, with respect to the binder vehicle matrix.

17. A process according to claims 9 to 16, characterised in that xylene, butanol or a propylene glycol monoalkyl ether, particularly -butyl ether, is used as the solvent.

18. A process according to claims 9 to 17, characterised in that the lens covers and transparent cover plates made of inorganic glass are stoved at a temperature within the range from 150 to 200°C.

19. A process according to claims 9 to 17, characterised in that the lens covers and transparent cover plates made of organic glass are stoved at a temperature within the range from 80 to 150°C.

20. A process according to claims 9 to 19, characterised in that the coating film is applied by pouring, rolling, brushing, spraying and/or dipping.

21. The use of fatty acids having 8 to 18 C atoms, containing 1 to 14 moles of ethylene oxide or propylene oxide, for producing condensation-preventing coatings for lens covers and transparent cover plates, which are subjected to thermal loading, of vehicle lights and headlamps, in a coating medium based on a water-insoluble binder vehicle matrix of a polyacrylic and/or polyester resin, which is self-crosslinked via methylol groups or which is externally crosslinked via amino resins, which contains at least one nonionic surface-active agent, including the alkoxylated fatty acids, in an amount of 5 to 60 % by weight with respect to the binder vehicle matrix.

22. The use of alkoxylated fatty acids according to claim 21 in a process according to claims 9 to 20.

## Revendications

1. Glaces d'éclairages et voyants transparents de feux ou phares de véhicules, en verte minéral ou organique, portant un revêtement d'un produit à base d'une gangue de liant insoluble dans l'eau, d'une résine polyacrylique et/ou d'une résine de polyester auto-réticulante par l'intermédiaire des groupes méthylol ou sous l'action de résines aminées, ce produit contenant au moins un agent non ionique en quantité de 5 à 60 % du poids de la gangue de liant, cet agent mouillant consistant en au moins un des composés suivants ou en un mélange de ces composés :
(a) les alcools gras et/ou amines grasses en C₈-C₁₈, les alcools Oxo en C₉-C₁₅ et le nonylphénol, tous condensés avec 1 à 14 mol d'oxyde d'éthylène ou d'oxyde de propylène par mole,
(b) des alkylmonoglucosides et/ou des alkylpolyglucosides contenant 2 à 6 motifs de glucose avec, pour chacun d'entre eux, liaison acétalique du groupe alkyle à chaîne droite et saturée en C₈-C₁₈ sur le glucose et avec jusqu'à 14 groupes oxyde d'éthylène par mole, et les mono-, di- et tri-glycérides correspondants,
(c) des éthoxylates bloqués en position terminale et répondant à la formule générale I
R-O[CH₂-CH₂O]ₙ-H (I)
dans laquelle
R représente un groupe alkyle, aryle ou alkylaryle en C₁-C₁₀,
n est un nombre entier allant de 4 à 10,
qui sont le cas échéant fixés par addition sur des alcoolates supérieurs et
(d) des polyéther-polysiloxanes.

2. Mode de réalisation selon la revendication 1, caractérisé en ce que la gangue de liant contient d'autres résines, en particulier des résines époxydiques, en proportions allant jusqu'à 10 % en poids.

3. Articles selon la revendication 1, caractérisés en ce que l'agent mouillant non ionique du produit de revêtement est choisi dans le groupe formé par le nonylphénol condensé avec 6 à 10 groupes d'oxyde d'éthylène, plus spécialement 8 groupes oxyde d'éthylène par mole, et/ou le mono-stéarate, -oléate ou -laurate de sorbitan contenant jusqu'à 14 groupes oxyde d'éthylène par mole et/ou des copolymères polyéther-polyméthylsiloxanes de formule générale II 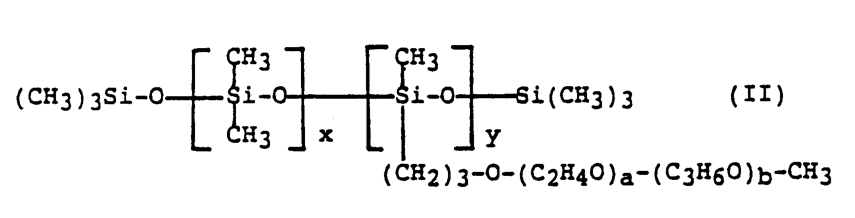 dans laquelle
x et y sont entre eux dans un rapport de 5 : 1 à 1 : 1,
a a une valeur de 80 à 100 % en poids et
b a une valeur de 20 à 0 % en poids.

4. Mode de réalisation selon la revendication 1, caractérisé en ce que la concentration de l'agent mouillant non ionique du produit de revêtement est de 10 à 30 % du poids de la gangue de liant.

5. Mode de réalisation selon les revendications 1 à 4, caractérisé en ce que le produit de revêtement contient au moins un agent d'adhérence.

6. Mode de réalisation selon la revendication 5, caractérisé en ce que le produit de revêtement contient en tant qu'agent d'adhérence un trialcoxysilane fonctionnel de formule générale III
Y-(CH₂)ₙSi-(OR)₃ (III)
dans laquelle
Y représente un groupe amino, carboxy, cyano, méthacryloxy, époxy, mercapto ou vinyle,
n est un nombre entier allant de 1 à 3 ou égal à 0 et
R représente un groupe alkyle en C₁-C₃, plus spécialement CH₃.

7. Mode de réalisation selon la revendication 6, caractérisé en ce que le trialcoxysilane du produit de revêtement est choisi parmi le 3-(2,3-époxypropyloxy)propyl(triméthoxy)silane et le N-β-(aminoéthyl)aminopropyl(triméthoxy)silane.

8. Mode de réalisation selon les revendications 5 à 7, caractérisé en ce que le produit de revêtement contient un agent d'adhérence en quantité de 1 à 10 %, plus spécialement de 1 à 5 % du poids de la gangue de liant.

9. Procédé pour revêtir des glaces d'éclairages et des voyants transparents de feux ou phares de véhicules en verte minéral ou organique par un produit de revêtement à base d'une gangue de liant insoluble dans l'eau d'une résine polyacrylique et/ou d'une résine de polyester auto-réticulante par l'intermédiaire de groupes méthylol et/ou sous l'action de résines aminées, qui contient au moins un agent mouillant non ionique en quantité de 5 à 60 % du poids de la gangue de liant, cet agent mouillant consistant en au moins un des composés suivants ou en un mélange de tels composés :
(a) des alcools gras et/ou des amines grasses en C₈-C₁₈, des alcools Oxo en C₉-C₁₅ et le nonylphénol, tous condensés avec 1 à 14 mol d'oxyde d'éthylène ou d'oxyde de propylène par mole,
(b) des alkylmonoglucosides et/ou des alkylpolyglucosides contenant 2 à 6 motifs de glucose, chacun avec liaison acétalique du groupe alkyle à chaîne droite et saturée en C₈-C₁₈ sur le glucose et avec jusqu'à 14 groupes oxyde d'éthylène par mole, et les mono-, di- et tri-glycérides correspondants,
(c) des éthoxylates bloqués en position terminale répondant à la formule générale I
R-O[CH₂-CH₂O]ₙ-H (I)
dans laquelle
R représente un groupe alkyle, aryle ou alkylaryle en C₁-C₁₀ et
n est un nombre entier allant de 4 à 10,
qui le cas échéant sont fixés par addition avec des alcoolates supérieurs et
(d) des polyéther-polysiloxanes,
dans lequel on met en contact le mélange des constituants du produit de revêtement, le cas échéant dans un solvant inerte, avec les parties voulues de la surface des glaces d'éclairages et des voyants transparents, avec formation d'une pellicule uniforme, le cas échéant on sèche à l'air puis on cuit en une durée d'une minute à une heure à des températures dans l'intervalle de 80 à 400°C.

10. Procédé selon la revendication 9, caractérisé en ce que la gangue de liant contient d'autres résines, plus spécialement des résines époxydiques, en quantité allant jusqu'à 10 % en poids.

11. Procédé selon les revendications 9 ou 10, caractérisé en ce que l'agent mouillant non ionique du produit de revêtement est choisi parmi le nonylphénol condensé avec 6 à 10 groupes oxyde d'éthylène, plus spécialement 8 groupes oxyde d'éthylène par mole, et/ou le mono-stéarate, -oléate ou -laurate de sorbitan condensé avec jusqu'à 14 groupes oxyde d'éthylène par mole et/ou des copolymères polyéther-polyméthylsiloxanes de formule générale II 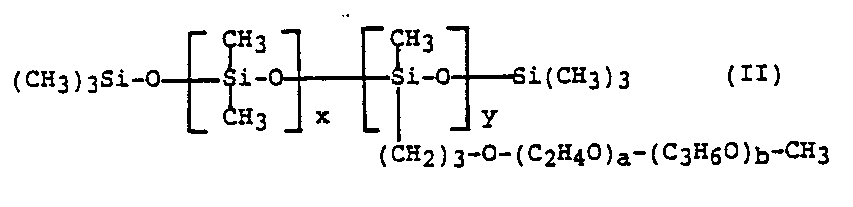 dans laquelle
x et y sont entre eux dans un rapport de 5 : 1 à 1 : 1,
a a une valeur de 80 à 100% en poids et
b a une valeur de 1 à 0 % en poids.

12. Procédé selon les revendications 9 à 11, caractérisé en ce la concentration de l'agent mouillant non ionique du produit de revêtement est de 10 à 30 % du poids de la gangue de liant.

13. Procédé selon les revendications 9 à 12, caractérisé en ce que l'on utilise un produit de revêtement qui contient au moins un agent d'adhérence.

14. Procédé selon la revendication 13, caractérisé en ce que le produit de revêtement contient en tant qu'agent d'adhérence un trialcoxysilane fonctionne! de formule générale III
Y-(CH₂)ₙSi-(OR)₃ (III)
dans laquelle
Y représente un groupe amino, carboxy, cyano, méthacryloxy, époxy, mercapto ou vinyle,
n est un nombre entier allant de 1 à 3 ou égal à 0 et
R représente un groupe alkyle en C₁-C₃, plus spécialement CH₃.

15. Procédé selon la revendication 14, caractérisé en ce que le trialcoxysilane du produit de revêtement est choisi parmi le 3-(2,3-époxypropyloxy)propyl(triméthoxy)silane et le N-β-(aminoéthyl)aminopropyl(triméthoxy)silane.

16. Procédé selon les revendications 13 à 15, caractérisé en ce que le produit de revêtement contient un agent d'adhérence en quantité de 1 à 10 %, plus spécialement de 1 à 5 % du poids de la gangue de liant.

17. Procédé selon les revendications 9 à 16, caractérisé en ce que l'on utilise en tant que solvant le xylène, le butanol, un éther mono-alkylique du propylèneglycol, plus spécialement l'éther monobutylique.

18. Procédé selon les revendications 9 à 17, caractérisé en ce que l'on cuit les glaces d'éclairages et voyants transparents en verte minéral à des températures dans l'intervalle de 150 à 200°C.

19. Procédé selon les revendications 9 à 17, caractérisé en ce que l'on cuit les glaces d'éclairages et voyants transparents en verte organique à des températures dans l'intervalle de 80 à 150°C.

20. Procédé selon les revendications 9 à 19, caractérisé en ce que l'on applique la pellicule de revêtement par coulée, au rouleau, à la brosse, par pulvérisation et/ou par immersion.

21. Utilisation d'acides gras en C₈-C₁₈, contenant de 1 à 14 mol d'oxyde d'éthylène ou d'oxyde de propylène, pour l'application de revêtement antibuée sur des glaces d'éclairages et des voyants transparents de feux et phares de véhicules exposés à des contraintes thermiques, dans un produit de revêtement à base d'une gangue de liant insoluble dans l'eau d'une résine polyacrylique et/ou de polyester auto-réticulant par l'intermédiaire de groupes méthylol ou sous l'action de résines aminées, qui contient au moins un agent mouillant non ionique, y compris les acides gras alcoxylés, en quantité de 5 à 60 % du poids de la gangue de liant.

22. Utilisation des acides gras alcoxylés selon la revendication 21 dans un procédé selon les revendications 9 à 20.
